# EUROPEAN PATENT APPLICATION

(11) **EP 1 837 060 A1**
(43) Date of publication of application: **26.09.2007**
(21) Application number: 06290449.5
(22) Date of filing: 21.03.2006
(51) Int. Cl.: A63F 13/12

(54) **Method for displaying interactive video content from a video stream in a display of a user device**

(71) Applicant: In Fusio (S.A.), 33000 Bordeaux (FR)
(72) Inventor: Landspurg, Thomas, 33920 Civrac de Blaye (FR)
(74) Representative: Hirsch & Associés

(57) **Abstract**

The invention proposes a method for displaying interactive video content from a video stream in a display of a user device (200, 300, 400), the method comprising:
- receiving (S10 - 40) at the device (200, 300, 400) a video stream from a server (100);
- displaying in the display of the device (200, 300, 400) said video stream (1000) together with a graphic element (1100);
- upon user action, modifying a feature of the graphic element (1100) and transmitting (S50) a signal to the server (100); and
- receiving (S60, S20, S30, S40) at the device (200, 300, 400) a video stream modified from the server (100), according to the transmitted signal.

The invention is further directed to a mobile application product, comprising code means for implementing the steps in the method according to the invention and a platform comprising a server or a set of servers.

## Description

### FIELD OF THE INVENTION

This invention generally relates to the field of displaying interactive video content from a video stream in a display of a user device, using for example an entertainment-based applications, such as mobile games or multimedia applications.

### BACKGROUND OF THE INVENTION

A number of methods are known for displaying video content using video streaming. In video streaming, the video media is viewed while it is being delivered. In the field of media streaming, it is generally accepted as a definition that streaming is more related to a property of the delivery system than the media itself.

For example, an application may run on a given user device, allowing for a video content (in a given data format) streamed from an external server to be seen on a display of said user device. In particular, said application may be a mobile game and said user device a mobile phone.

One aim of the invention is to design a method in which an application allows a user to interact with the content of the video stream. Now, when the user locally interacts with the application while an impact on the content of the streamed video is expected accordingly, a latency (possibly up to a few seconds) is likely to occur before the streamed video content as seen by the user is effectively affected by the user action. Such latency is unacceptable in the context of entertainment-based applications, in particular in the context of video games such as arcade games.

There is therefore a need for a method for displaying video content in an application using a video stream and running in a user device, which solves the above problem.

Furthermore, to the best of their knowledge, the prior art, whilst suggesting some features and some variations relevant to application using a video stream in general, the prior art has not disclosed some of the highly advantageous features of the present invention discussed herein.

### SUMMARY OF THE INVENTION

The invention therefore proposes a method for displaying interactive video content from a video stream in a display of a user device, the method comprising:
- receiving at the device a video stream from a server;
- displaying in the display of the device said video stream together with a graphic element;
- upon a user action, modifying a feature of the graphic element and transmitting a signal to the server; and
- receiving at the device a video stream modified from the server, according to the transmitted signal.

In other embodiments, the method according to the invention may comprise one or more of the following features:
- at the transmitting step, the transmitted signal includes information specific to a nature of the user action;
- the step of receiving further comprises receiving information data of current status of the video stream and the step of modifying one or more features of the graphic element comprises taking into account both the user action and the current status information data;
- the video stream received at the steps of receiving is real-time generated at the server;
- the user device is a PC client, a UMTS handset or a 3D accelerated phone;
- the device uses the EGE technology;

The invention is also directed to a mobile application product, comprising code means for implementing the steps of the method according to the invention.

In addition, the invention further proposes a platform comprising a server connected to a network, said server being adapted for carrying out the steps of :
- generating and sending through the network a video stream suitable for subsequent display within an application of a user device;
- receiving a signal from the user device, related to a user action detected by the application;
- modifying the video stream in response to said signal; and
- sending the modified video stream through the network to the user device.

The platform may further comprise means for sending information data of current status of the video stream at the step of generating and sending. The video stream may further be real-time generated and modified.

The foregoing has outlined rather broadly the features and advantages of the present invention in order that the detailed description of the invention that follows may be better understood. Additional features and advantages of the invention will be described hereinafter which form the subject of the claims of the invention. It should be appreciated by those skilled in the art that the conception and specific embodiments disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figure. It is to be expressly understood, however, that the figure is provided for the purpose of illustration and description only and is not intended as a definition of the limits of the present invention.

### BRIEF DESCRIPTION OF THE DRAWING FIGURE

For a more complete understanding of the present invention, reference is now made to the following description taken in conjunction with the accompanying drawings, showing:
- FIG. 1: a schematic representation of some possible network components involved in the method according to the invention;
- FIG. 2: a schematic diagram illustrating steps of the method according to an embodiment of the invention;
- FIG. 3A: an example of a simplified screenshot of a video content, as it would appear in a user device display;
- FIG. 3B: an example of a graphical element to be added on top of a video stream, within an application implementing the method according to the invention.
- FIG. 3C: an example of a screenshot of a video stream displayed together with a graphic element of the application;
- FIG. 4A - C: a sequence of screenshots of a displayed video content, as operated according to an embodiment of the invention.

### DETAILED DESCRIPTION OF PREFERRED EMBODIMENTS

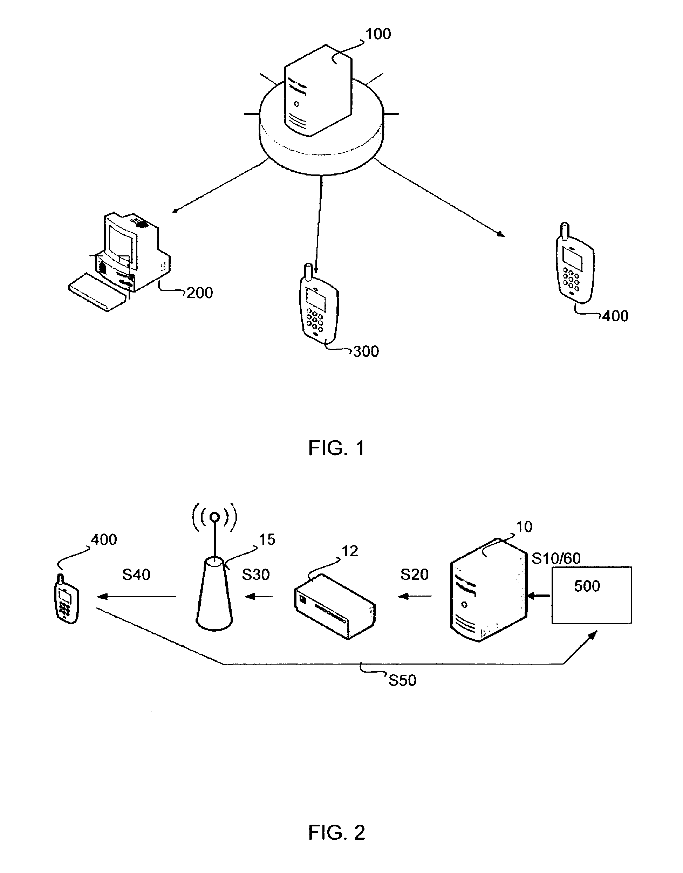

In reference to FIG. 1, a server 100 is shown which is likely to communicate with user devices such as a PC client 200, a UMTS Handset 300 or a 3D Accelerated Phone 400, through a communication network (not shown).

The method according to the invention may therefore involve pairs of components such as (i) server 100 and PC client 200, (ii) server 100 and UMTS handset 300 or (iii) server 100 and 3D accelerated phone 400.

Notice that while a single server 100 is illustrated, a set of servers may alternatively be used in the implementation of the invention.

Similarly other types of user devices may be contemplated, such as personal digital assistants.

FIG. 2 shows the server 100, together with a user device 400 (here an accelerated phone) and other components which may possibly be used to implement the method according to an embodiment of the invention.

Said components are for instance a video encoder 12 and an operator network 15. Furthermore, a game logic 500 may run in the server computer 100 (for example:
the game logic 500 is an application of the server 100).

Steps S10, S20, S30, S40, S50 and S60 are likely to occur in an embodiment of the invention and will be detailed hereafter.

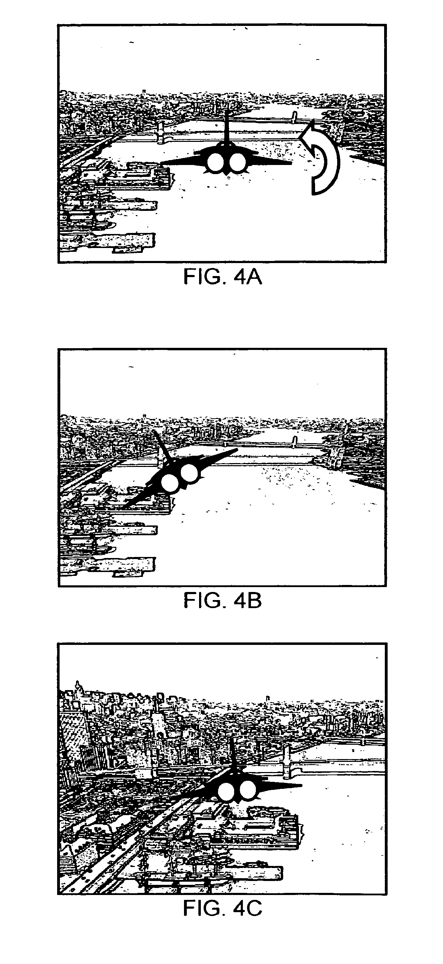

One assumes that a user has turned on his/her device 400 and launched an application of the device. Said application is typically a game application (for example a flight simulator in an embodiment) suitable for displaying a video stream. Some details of said game will be later given in reference to FIG. 4A - C. After launching, the application is ready for receiving and rendering a video stream.

"Video stream" denotes here any video data transmission that occurs in a continuous flow. This flow is possibly compressed.

According to the invention, the method comprises a step of receiving at the user device 400 said video stream from the server 100 (see S10 - 40).

The receiving (broad) step S10 - 40 decomposes itself preferably as several sub-steps, including:
S 10: the game logic 500, running on the server 100, makes available a first sequence of video stream, for example upon receiving a signal from the user device 400 for initializing the game sequence. Said video stream may be proposed in some convenient numeric format such as mpeg4 or AVI file formats.
S20: said sequence is then forwarded to a video encoder 12, in order to convert said numeric format in some other video signal suitable for transmission over the network 15 and reception at the user device 400. As known in the art, a variety of compression schema can be used.
S30: the converted sequence is transmitted to a network 15 for subsequent transmission to the user device 400.
S40: the first sequence is finally received at the user device 400. Said sequence is used by the game application as part of the game, for example as a game scenery.

Notice that in an alternative embodiment, video files may be supplemented with streamed audio files. Playing the audio files while streaming video content may else be locally triggered by the application.

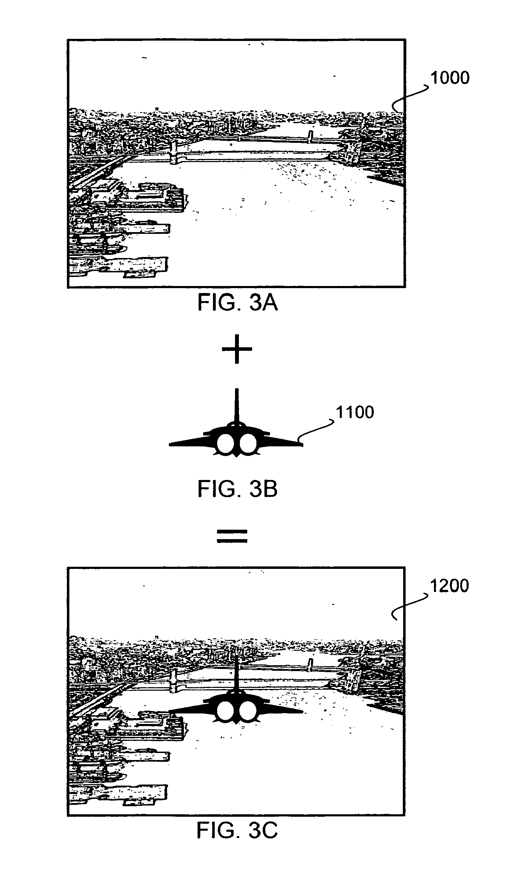

Turning to FIG. 3A - C, the method further comprises displaying in the display of the device 400 said video stream 1000 together with one or more graphic element 1100 of an application. As known in the art, streaming video files allows the application to display the beginning of the video content in the display of the device before all the data has been transferred. Therefore, steps of receiving the video stream S10- S40 and displaying in the display of the device 400 said video stream 1000 together with the one or more graphic element might be concomitant.

In particular, FIG. 3A shows an example of a (simplified) screenshot of a video content 1000, as it would appear in the display of the user device 400 during the streaming of the first sequence. In this example, the video content 1000 relates to scenery of a town crossed by a river with bridges and buildings on each sides of the river, as seen from the air. The details of said scenery are however not important for understanding the invention.

FIG. 3B shows an example of the graphical element 1100 to be added on top of the video stream 1000, within the application. The graphical element here represents some aircraft 1100, seen from behind, that is, from the side of its propelling nozzles. The resulting content 1200 is shown in FIG. 3C.

Thus, while playing the game, the user can see an aircraft 1100 flying above a city 1000 (FIG. 3C).

Concerning the gameplay: as the game relates to a flight simulator in this example, the user can "pilot" the aircraft 1100 from the graphical interface of the device 400. For example, the user can operate the aircraft 100 to turn left/right, possibly accelerate, decelerate, etc., by actuating keys of the device, joystick, mouse, stylus or a jog dial, etc.).

Obviously, a number of other examples could have been discussed here so as to illustrate principles of the method of the invention, such as a car driving on a road or a character walking in a street. The user may therefore operate a graphical element to move, turn, change of shape or color, transform, according to the theme of the application.

Next, upon user action, one or more feature of the graphic element 1100 are modified by the application. In the example above, the user may wish the aircraft 1100 to turn left, as will be exemplified now in reference to FIG. 4A - B.

FIG. 4A: at t0, the roll position (that is, the position around the front-to-back axis) of the aircraft is the normal horizontal position. Then, the user operates the graphical user interface of the device to make the aircraft turn left, as illustrated by the curved arrow.

FIG. 4B, at t1, following the user action, a feature of the graphic element, i.e. the aircraft, is modified. Here the aircraft is rotated to the left around the roll axis (and slightly shifted to the left). Accordingly, the user can see an effect of his/her action immediately or briefly after said action took place. More generally, he/she can see immediate reactions in the application after the user action took place, so that the gameplay is enhanced.

Referring back to FIG. 2: upon said user action, a signal is furthermore transmitted to the server 100 (step S50). Said transmission is requested by the game application either concomitantly or shortly after/before modifying features of the graphic element. The channel used for reception of the video stream can for instance be a two-way or bidirectional channel, whereby said signal can be transmitted back to the server using the same channel.

Preferably, the transmitted signal includes specific information relating to the nature of the user action amongst various possible user actions (for example: the user has typed a rotation to the left), in order that the video be modified accordingly. Several schemes of modifications of the video content are provided in this case, for example managed from the game logic. The gameplay is thereby improved.

Thanks to the signal transmitted from the user device 400, the video stream will be modified and a modified video stream will be received at the user device, from the server 100 (steps S60 - 20 - 30 - 40).

For example, when receiving (step S50) said signal, the game logic 500 may accordingly transform (step S60) the first sequence of video to another sequence, preferably in a continuous manner.

Notice that the video stream can be real time generated and real-time modified, upon reception of said signal.

Accordingly, the server 100 forwards a modified video stream to the encoder 12 (step S20) and subsequent steps S30, S40 are carried out in a similar way as for the first video sequence.

As a result, a modified video stream will appear in the display of the device 400. Hence, the game system (that is, the user device 400 with its application and the server 100/game logic 500) reacts in at least two different ways. A local and immediate reaction to a user action allows first for ensuring a gameplay (or more generally the interactivity). In addition, a feedback to the server 100 and game logic 500 makes it possible to impact the video stream according to the user action. The latency of the modification of the streamed video is thereby compensated by the local reaction.

In this respect, it is to be pointed out that the graphics level achieved via video stream can easily be better than that obtained from usual gamewares. This is of special interest for multi-media application or photorealistic games. Furthermore, for a same graphics level, streaming requires little non-volatile memory, in comparison with a classical gameware. This turns especially advantageous in the case of applications running on handheld devices such as a UMTS handset, accelerated phone or a PDA, where little non-volatile memory is available in comparison with a personal computer. The invention therefore allows for rendering high-level graphics while preserving interactivity/gameplay.

The modification of the video stream is exemplified in FIG. 4C, showing a screenshot of a modified video content.

In FIG. 4C, after user action (at t2), the modified video content now relates to a view displaced to the left (a latency is to be expected, typically a few seconds for networked mobile games). Accordingly, the river now appears on the right side of the screenshot. Meanwhile, one can appreciate that the content of FIG. 4C is slightly zoomed-in, in comparison with former screenshots, as a result of the flight simulation between t0 or t1 and t2.

In addition, the game logic and server may transmit information data accompanying the video stream. Information can next be extracted by the application for various advantageous purposes.

First, said information data may relate to a current state of the video content, e.g. relating to the picture of the video content being currently seen by the user. This may involve a synchronism between said information and the video content. For example, transmittal of said information can be synchronized with the video content being streamed or said information must include synchronization data allowing the application to correlate current state information and the video content. The information/video content synchronism may be managed by the game logic.

The client (end user device application) may hence operate local modifications according to both the user actions and the current state information data, so as to improve the interactivity/gameplay.

For example: the user instructs the device to turn left. A local feature is accordingly modified (the aircraft rotates to the left) while corresponding signal is transmitted to the server. The video content is next modified and subsequently displayed in the user device. The local application may at this point automatically move the aircraft back to a default position (e.g. the centre of the screen, see FIG. 4C), based on the current status information data.

Said current status information data may be more generally used to locally modify features of displayed graphics elements, so as to improve the interactivity/gameplay. As an example, assume the aircraft of FIG. 4A - C is facing "enemy" aircrafts (not represented). Upon receiving the modified sequence and corresponding current status, the game application would modify positions of the enemy aircraft accordingly. A variety of other examples can obviously be contemplated.

One may for instance contemplate using the EGE® (for Entertainment Game Engine Extension) technology to design an interactive game using video streaming, in the context of the MIDP^{™} 2.0 standard or above.. EGE Client is a set of APIs and services built on top of MIDP 2.0 which include a services manager and gaming APIs.

Next, the invention is further directed to the (local) application itself (for example available as a mobile application product, possibly available for download), comprising code means for implementing the steps in the method according to the invention.

While the local application allows the method according to the invention to be implemented in the user device, another application or game logic may be implemented at the level of the server.

In this respect, referring back to FIG. 2, the invention further proposes a computer system (or platform) equipped with a computer program (e.g. including the game logic 500). The platform comprises a server 100 or a set of servers (including e.g. server 100) connected to a network 15. Said set of servers is adapted for carrying out a step of generating a video stream (via the game logic, step S10 - S20). Instructions are then given at the server level to send the generated video stream through the network 15 (steps S30 - 40) for subsequent display in the user device 400, as mentioned above. The video stream can be real-time generated and modified, as explained. Next, upon receiving a signal from the user device (after said user action), the video stream is modified in response to said signal and sent through the network 15.

## Claims

1. A method for displaying interactive video content from a video stream in a display of a user device (200, 300, 400), the method comprising:
- receiving (S10 - 40) at the device (200, 300, 400) a video stream from a server (100);
- displaying in the display of the device (200, 300, 400) said video stream (1000) together with a graphic element (1100);
- upon a user action, modifying a feature of the graphic element (1100) and transmitting (S50) a signal to the server (100); and
- receiving (S60, S20, S30, S40) at the device (200, 300, 400) a video stream modified from the server (100), according to the transmitted signal.

2. The method according to claim 1 or 2, wherein, at the transmitting (S50) step, the transmitted signal includes information specific to a nature of the user action.

3. The method according to claim 1 or 2, wherein:
- the step (S10 - 40) of receiving further comprises receiving information data of current status of the video stream; and
- the step of modifying one or more features of the graphic element comprises taking into account both the user action and the current status information data.

4. The method according to claim 1, 2 or 3, wherein the video stream received at the steps of receiving is real-time generated at the server (100).

5. The method according to any one of claims 1 to 4, wherein the user device is a PC client (200), a UMTS handset (300) or a 3D accelerated phone (400).

6. The method according to any one of claims 1 - 5, wherein the device (300, 400) uses the EGE technology.

7. A mobile application product, comprising code means for implementing the steps in the method according to anyone of claims 1 - 6.

8. A platform comprising a server (100) connected to a network (15), said server (100) being adapted for carrying out the steps of :
- generating and sending (S10 - 40) through the network (15) a video stream suitable for subsequent display within an application of a user device (200, 300, 400);
- receiving (S50) a signal from the user device (200, 300, 400), related to a user action detected by the application;
- modifying (S60) the video stream in response to said signal; and
- sending (S20 - 40) the modified video stream through the network to the user device (200, 300, 400).

9. The platform of claim 8, further comprising means for sending information data of current status of the video stream at the step of generating and sending (S10 - 40).

10. The platform of claim 8 or 9, wherein the video stream is real-time generated and modified.
